# EUROPÄISCHE PATENTSCHRIFT

(11) **EP 0 460 378 B1**
(45) Veröffentlichungstag und Bekanntmachung des Hinweises auf die Patenterteilung: **12.10.1994**
(21) Anmeldenummer: 91105537.4
(22) Anmeldetag: 08.04.1991
(51) Int. Cl.: B60T 17/22, F16D 66/02, F16D 65/60

(54) **Bremsbetätigungseinrichtung mit einer Einrichtung zum Nachstellen einer Bremse**
Brake actuating device with brake adjusting means
Dispositif de commande de frein à dispositif pour ajuster un frein

(30) Priorität: 05.06.1990 DE 4017951
(43) Veröffentlichungstag der Anmeldung: 11.12.1991
(73) Patentinhaber: WABCO GmbH, 30453 Hannover (DE)
(72) Erfinder: Frania, Josef, W-3000 Hannover (DE)
(74) Vertreter: Schrödter, Manfred, Dipl.-Ing.

(56) Entgegenhaltungen:
- EP-A- 0 030 766
- EP-A- 0 370 173
- DE-A- 1 600 223
- DE-A- 3 343 885
- DE-B- 1 480 038
- DE-B- 2 116 121

## Beschreibung

Die Erfindung betrifft eine Bremsbetätigungseinrichtung mit einer Einrichtung zum Nachstellen einer Bremse, insbesondere einer Fahrzeugbremse, gemäß dem Oberbegriff des Patentanspruchs 1.

Eine derartige Einrichtung ist durch die DE-PS 1 480 038 vorbekannt. Die vorbekannte Einrichtung weist eine Nachstelleinrichtung auf, mit der Teile eines Bremsgestänges, nämlich eine Bremswelle und ein darauf angeordneter Bremshebel gegeneinander verstellbar sind. Die Verstellung dient einer kontinuierlichen Nachjustierung des Bremsgestänges im Sinne einer Aufrechterhaltung eines vorgegebenen Bremslüftspiels. Diese Nachjustierung soll ein gleichbleibendes Ansprechverhalten der Bremsen bzw. Bremsverhalten gewährleisten, was nicht zuletzt aus Gründen der Fahrsicherheit Gegenstand entsprechender gesetzlicher Regelungen ist.

Verschleiß oder Defekte der Nachstelleinrichtung und deren Betätigungsmechanismus können jedoch ein fehlerhaftes Nachjustieren bewirken, mit der Folge, daß das durch den Bremsentyp vorgegebene Bremslüftspiel im Verlaufe des Fahrbetriebes nicht mehr aufrecht erhalten bleibt und dann nicht mehr dem tatsächlichen Bremsbelagverschleiß entspricht. Bei der vorbekannten Einrichtung ist eine fehlerhafte Nachjustierung, oder das gänzliche Ausbleiben einer solchen, nur durch einen sich verändernden Bremsbetätigungshub oder ein Nachlassen der Bremswirkung erkennbar. Diese unerwünschte Veränderung des Bremslüftspiels vollzieht sich jedoch nur allmählich und gewöhnlich über einen längeren Zeitabschnitt und ist daher anfänglich kaum wahrnehmbar. Aus Sicherheitsgründen besteht daher das Bedürfnis, dem Betreiber die Gewißheit über den tatsächlichen Zustand des Bremslüftspiels und des Verschleißes des Bremsbelages zu erhalten.

Der Erfindung liegt die Aufgabe zugrunde, eine Bremsbetätigungseinrichtung der eingangs erwähnten Art mit einfachen Mitteln so zu verbessern, daß der dem Bremslüftspiel entsprechende Betätigungshub des Bremsgestänges und der Verschleiß des Bremsbelages kontinuierlich erfaßbar ist.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung läßt sich kostengünstig unter Verwendung eines handelsüblichen fühlergesteuerten Wegsensors, wie er beispielsweise in der DE 33 43 885 A1 beschrieben ist, ausführen.

Die Erfindung eröffnet die Möglichkeit, den Zustand bzw. das Betriebsverhalten der Bremseinrichtung in ein elektronisches Diagnosesystem, sei es werkstattgebunden, sei es im Falle eines Fahrzeugs bordeigen, einzubeziehen.

Die Erfindung läßt sich mit jedem geeigneten Bremshebel, unabhängig von der Art des auf ihm wirkenden Betätigungsmechanismus, ausführen. Nur beispielhaft seinen hierfür mit Druckluft oder Bremsflüssigkeit betätigbare Bremszylinder genannt.

Die Erfindung erhöht die aktive Sicherheit der Bremsanlage, was insbesondere bei Fahrzeugen vorteilhaft ist. Dies gilt insbesondere, wenn die Nachstelleinrichtung im Bremshebel angeordnet ist und daher ihre visuelle Überwachung kaum möglich ist.

Ein weiterer Vorteil der Erfindung besteht in ihrer weiteren Ausbildung durch eine Verbindung der Überwachungseinrichtung mit Funktionselementen des Bremshebels und einer dadurch erreichten Kapselung gegen am Fahrzeug herrschende Umwelteinflüsse.

Weitere Vorteile der Erfindung werden in der nachstehenden Erläuterung anhand eines in der Zeichnung dargestellten Ausführungsbeispiels beschrieben.

Die Erfindung wird anhand eines Ausführungsbeispiels, das in der Zeichnung dargestellt ist, näher erläutert.

Es zeigen.
- **Fig.1**: eine Bremsbetätigungseinrichtung mit Einrichtungen zur Überwachung des Bremsbetätigungshubes und des Bremsbelagverschleißes,
- **Fig.2**: eine Einzelheit der Einrichtung zur Überwachung des Bremsbetätigungshubes gemäß Fig.1,
- **Fig.3**: eine Einzelheit der Einrichtung zur Überwachung des Bremsbelagverschleißes gemäß Fig.1,
- **Fig.4**: eine Variante der Einrichtung gemäß Fig.1,
- **Fig.5**: eine weitere Variante der Einrichtung gemäß Fig.1.

Die dargestellte Einrichtung ist dafür vorgesehen, die Funktion der Nachstelleinrichtung zwecks Aufrechterhaltung eines annähernd konstanten Bremslüftspiels sowie den Bremsbelagverschleiß zu überwachen.

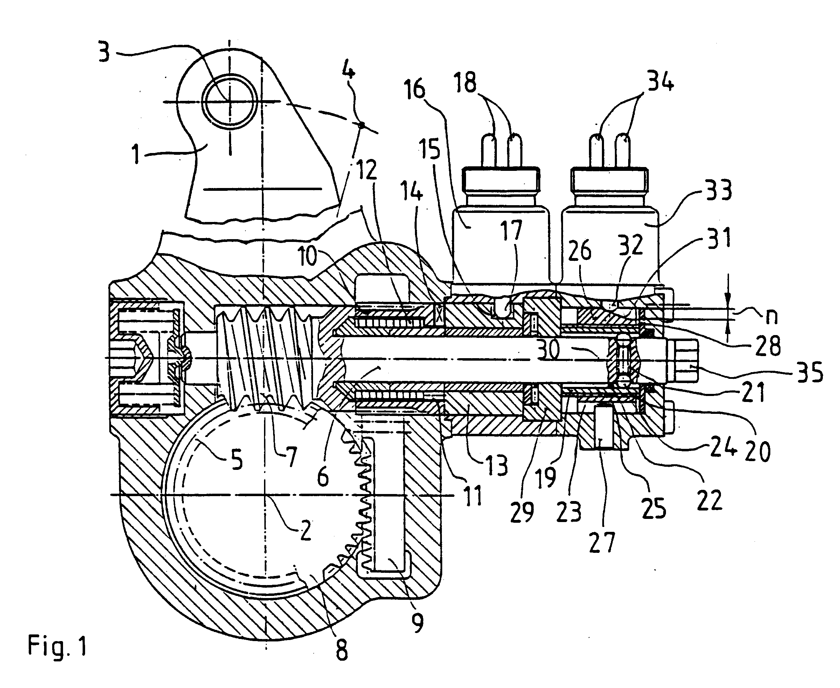

Die Bremsbetätigungseinrichtung umfaßt gemäß Fig.1 einen Bremshebel (1), der auf einer Bremsbetätigungswelle (2) angeordnet ist, sowie ein nicht dargestelltes Betätigungsorgan, wie z.B. einen durch ein Druckmittel betätigbaren Bremszylinder, mit dem der Bremshebel (1) mit der Bremsbetätigungswelle (2) um die Drehachse der Bremsbetätigungswelle (2) verschwenkbar ist. Der bei der Verschwenkung vom Bremshebel (1) durchfahrene Bremshebelausschlag zwischen einer vorgegebenen Anfangsstellung (3) und einer Endstellung (4) entspricht dem Durchfahren eines Lüftspiels der Bremselemente, wie z.B. Bremsbacken und Bremstrommel, bis zu deren Eingriff bei einer Bremsbetätigung.

Zwischen der Bremsbetätigungswelle (2) und dem Bremshebel (1) ist eine Nachstelleinrichtung (5, 7) in Form eines Getriebes mit einem Schneckenrad (5) und einer Schnecke (7) angeordnet. Um bei einem Verschleiß der Bremselemente dennoch ein vorgegebenes Bremslüftspiel aufrechtzuerhalten, ist die Bremsbetätigungswelle (2) gegenüber dem Bremshebel (1), dem Verschleiß entsprechend, durch die Nachstelleinrichtung (5, 7) verstellbar. Diese Verstellung bewirkt, daß der maximale Bremshebelausschlag bei einer Bremsbetätigung zwischen der Anfangsstellung (3) und der Endstellung (4) nahezu unverändert bleibt. Eine Abweichung hiervon in vorgegebenen Grenzen soll letztlich nur durch eine gewisse Elastizität des Bremsgestänges und durch eine unterschiedliche Erwärmung der Bremstrommel gegeben sein.

Die Nachstelleinrichtung (5, 7) ist durch einen Antrieb (8, 9, 10) betätigbar, der aus einem um die Bremsbetätigungswelle (2) und relativ zum Bremshebel (1) drehbar angeordneten Zahnrad (8), einer mit dem Zahnrad (8) in Eingriff befindlichen Zahnstange (9) und einem mit der Zahnstange (9) in Eingriff befindlichen Ritzel (10) gebildet ist. Zwischen dem Antrieb (8, 9, 10) und der Nachstelleinrichtung (5, 7) ist eine durch Anschläge (11) begrenzte Leerwegeinrichtung und eine Einwegkupplung (12) nach Art eines Freilaufs angeordnet.

Das Zahnrad (8) ist mit einem relativ zum Bremshebel (1) angeordneten Bezugspunkt verbunden, derart, daß bei einem Bremshebelausschlag durch eine Relativbewegung des Bremshebels (1) zum Zahnrad (8) die Zahnstange (9) und das Ritzel (10) in eine Antriebsbewegung relativ zu der Nachstelleinrichtung (5, 7) versetzt werden, wobei jedoch bei einer Drehbewegung des Ritzels (10) innerhalb der Anschläge (11) der Leerwegeinrichtung die Antriebsbewegung nicht über die Einwegkupplung (12) auf die Nachstelleinrichtung (5, 7) übertragen wird. Die Antriebsbewegung von Zahnstange (9) und Ritzel (10), bei der sich das Ritzel (10) zwischen den Anschlägen (11) der Leerwegeinrichtung bewegt, entspricht dem Bremshebelausschlag zwischen der Anfangsstellung (3) und der Endstellung (4), der einem vorgegebenen Bremslüftspiel zwischen den Bremsbacken und der Bremstrommel entsprechen soll.

Ein Bremshebel mit einer automatische Nachstellung der Bremsbetätigungswelle, ähnlich dem der vorstehend beschriebenen Einrichtung, ist auch durch die EP 0 030 766 A1 bekannt. Anstelle der Zahnstange (9) und dem Ritzel (10) ist hier der Antrieb der Nachstelleinrichtung durch ein Zahnrad, eine mit dem Zahnrad drehfest verbundenen Schnecke und ein von der Schnecke antreibbares Schneckenrad gebildet. Dieser Antrieb der Nachstelleinrichtung wird ebenfalls bei einem Bremshebelausschlag stets zwischen Endanschlägen einer Leerwegeinrichtung in zwei Richtungen bewegt.

Bei einem Defekt der vorstehend beschriebenen Nachstelleinrichtungen, d.h., wenn der durch den Fahrbetrieb auftretende Verschleiß der Bremselemente nicht durch ein Verstellen der Bremsbetätigungswelle (2) relativ zum Bremshebel (1) kompensiert wird, stellt sich bei Bremsbetätigungen ein Bremshebelausschlag ein, der die Endstellung (4) überschreitet.

Die Fig.1 zeigt die Bremsbetätigungseinrichtung mit dem Bremshebel (1) in Kombination mit einer Einrichtung zur Überwachung des Bremshebelausschlages wie sie beispielsweise in der DE 33 43 885 A1 beschrieben ist. Auf einem Fortsatz (6) der Schnecke (7) ist eine Hülse (13) drehbar gelagert und mit dem Ritzel (10) einstückig, oder durch eine Steckverbindung (14) drehfest, verbunden. Die so als Fortsatz (13) des Ritzes (10) ausgebildete Hülse (13) folgt der vor- und rückläufigen Antriebsbewegung des Ritzels (10) bei einem Bremshebelausschlag.

Die Hülse (13) weist eine an ihrem Umfang sich erstreckende Vertiefung (15) auf, die als Steuerkurve (15) wirkt und der Erzeugung eines ersten Meßweges (s) dient. Anstelle der Vertiefung (15) kann auch eine an dem Umfang der Hülse (13) sich erstreckenden Erhöhung ebenfalls als Steuerkurve (15) zur Erzeugung des Meßweges (s) dienen.

Mit dem Bremshebel (1) fest verbunden und die Hülse (13) umgreifend, ist die Einrichtung zur Überwachung des Bremshebelausschlages in der Art eines Signalgebers (16) angeordnet, der sich in an sich bekannter Weise elektrisch, mit Spule und Kern, ausgebildet ist. Der Kern der Spule ist durch einen Wegsensor (17) in der Art eines Taststiftes (17) gebildet, der mit der Steuerkurve (15) der Hülse (13) im Eingriff befindlich ist. Die mittels des Signalgebers (16) erzeugbaren elektrischen Signale sind über elektrische Kontakte (18) einer Anzeige- bzw. Auswerteeinrichtung zuführbar.

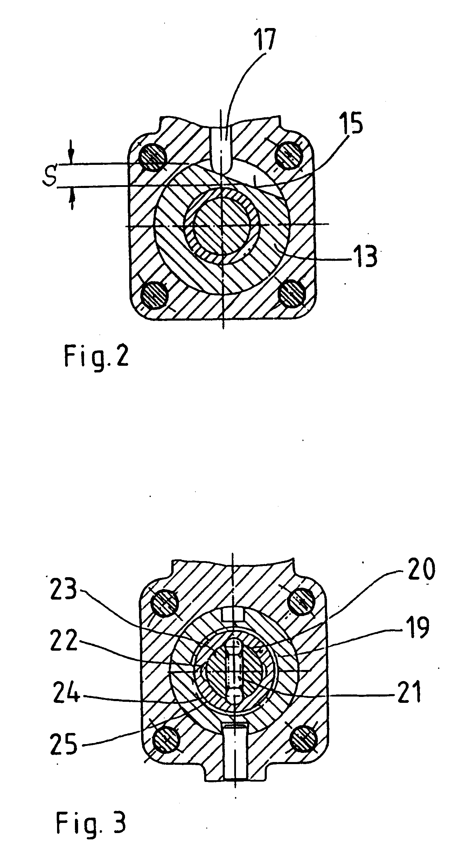

Mit der Schwenkbewegung der Steuerkurve (15), entsprechend der Bewegung des Ritzels (10) bzw. der Hülse (13) wird der dem Bremslüftspiel entsprechende Meßweg (s) erzeugt, der von dem Wegsensor (17) abgetastet und durch eine Längsbewegung dem Signalgeber (16) mitgeteilt wird. (Fig.2)

Bei einem Defekt der Bremsbetätigungseinrichtung, wie z.B. einem nicht exakten Funktionieren der Nachstelleinrichtung (5, 7), der einen über die Endstellung (4) hinausragenden Bremshebelausschlag zur Folge hat, wird die Steuerkurve (15) relativ zum vergrößerten Bremshebelausschlag über ihre durch die Endstellung (4) des Bremshebels (1) vorgegebene Endstellung hinaus bewegt.

Der Wegsensor (17) wird dann durch die Steuerkurve (15) in eine dem vergrößerten Bremshebelausschlag entsprechende Position relativ zum Signalgeber (16) bewegt, die an den elektrischen Anschlüssen (18) des Signalgebers (16) als verändertes elektrisches Signal meßbar bzw. abgreifbar ist.

Die Mittel zur Auswertung des elektrischen Signals können so ausgebildet sein, daß diese entweder den gesamten Bremshebelausschlag von der Anfangsstellung (3) über die Endstellung (4) hinausgehend zu einer Anzeige verwerten, oder nur dann eine Anzeige erfolgt, wenn der Bremshebel (1) über die Endstellung (4) hinausgehend bewegt wird.

Neben dem Signalgeber (16) für den Ausschlag des Bremshebels (1) bei der Bremsbetätigung zeigt die Fig.1 einen weiteren Signalgeber (33), der mit der Nachstelleinrichtung (5, 7) betätigbar ist und der Überwachung des Bremsbelagverschleißes dient.

Es ist eine den Fortsatz (6) der Schnecke (7) umgreifende Buchse (19) vorgesehen, die mit dem Fortsatz (6) drehfest verbunden ist. Die drehfeste Verbindung erfolgt über ein zwischen dem Fortsatz (6) und der Buchse (19) wirksames Gesperre (20), das z.B. in der Art eines mittels einer Feder (21) vorgespannten Kugelgesperres (20) mit Rasten (22) ausgebildet ist, die in beliebiger Anzahl am Innendurchmesser (23) der Buchse (19) angeordnet sind (siehe auch Fig.3).

Die Buchse (19) ist mit einem Außengewinde (24) versehen, das in Wirkverbindung mit einem Innengewinde (25) eines einen zweiten Meßweg (n) erzeugenden Bauteils (26) steht. Die Gewindeverbindung (24, 25) wirkt als Übertragungsmechanismus (24, 25) mit dem das Bauteil (26) entsprechend einer Drehbewegung der Schnecke (7), im Sinne einer Verstellbewegung der Nachstelleinrichtung (5, 7) bezüglich der Schnecke (7) längsbeweglich ist. Das Bauteil (26) ist gegen unbeabsichtigte Mitnahme auf der Buchse (19) durch einen gehäusefesten Stift (27) gesichert. Die Buchse (19) ist an ihren beiden Stirnseiten durch Stützlager (28, 29) gegen eine übermäßige Längsverschiebung bezüglich des Fortsatzes (6) gesichert. Das Bauteil (26) weist eine zu seiner Verschiebeachse (30) geneigte Steuerkurve (31) auf. Ein als Taststift (32) ausgebildeter Wegsensor (32) eines Signalgebers (33) befindet sich mit der Steuerkurve (31) in Eingriff. Die mittels des Signalgebers (33) erzeugbaren elektrischen Signale sind über elektrische Kontakte (34) einer Anzeige- bzw. Auswerteeinrichtung zuführbar.

Der Fortsatz (6) weist an seinem freien Ende eine Formgebung (35) auf, die zum Ansatz eines Schlüssels dient, mit der die Nachstelleinrichtung (5, 7) manuell verstellbar ist. Das Gesperre (20) dient in beiden Verstellrichtungen als Bruchsicherung, nachdem das Bauteil (26) durch Verstellung in den Endstellungen an den Stützlagern (28) oder (29) zur Anlage gekommen ist. Durch Überwinden des Gesperres (20) führt der Fortsatz (6) gegenüber der Buchse (19) und dem Bauteil (26) eine Relativbewegung aus.

Durch manuelle Verstellung der Nachstelleinrichtung (5, 7) wird der Bremshebel (1) in eine Ausgangsstellung (3) gebracht, in der bei vorgegebenem Bremslüftspiel die Steuerkurve (31) sich bezüglich des Wegsensors (32) am Beginn des Meßweges (n) befindet. Im Verlaufe des Fahrbetriebes wird die durch Verschleiß des Bremsbelages erfolgende erweiterte Verschwenkung des Bremshebels (1) in der zuvor beschriebenen Weise zur Verstellung der Nachstelleinrichtung (5, 7) genutzt. Die Verstellung der Nachstelleinrichtung (5, 7) wiederum bewirkt eine Relativbewegung der Steuerkurve (31) gegenüber dem Wegsensor (32). Die durch Abtasten der Steuerkurve (31) sich einstellende Position des Wegsensors (32) ist als elektrisches Signal über die Kontakte (34) einer Anzeige- bzw. Auswerteeinrichtung zuführbar, wo es als Grad des Bremsbelagverschleißes identifizierbar ist.

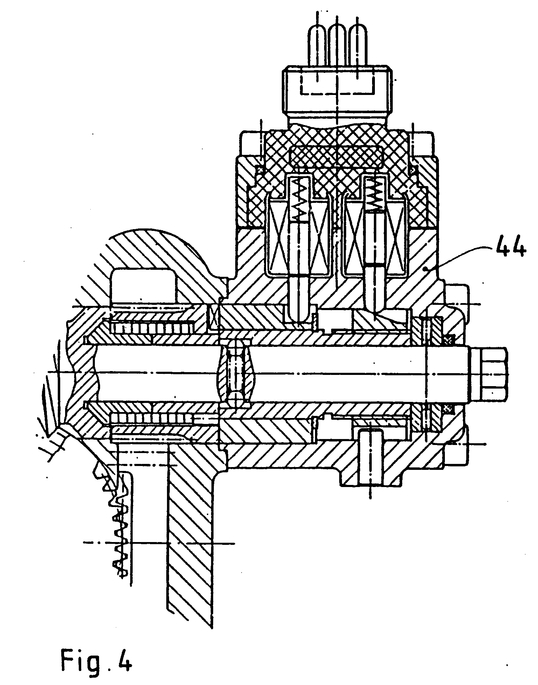

Die Fig.4 zeigt eine Einrichtung mit gleichen Elementen zur Erzeugung der Meßwege (s) und (n), jedoch sind hier die in der Fig.1 dargestellten Signalgeber (16) und (33) in einer Kompaktbauweise in einem Gehäuse (44) baulich vereinigt. Verglichen mit der Einrichtung gemäß Fig.1 ist hier in vorteilhafter Weise eine einfache Montage und eine günstige Abdichtung gegen Umwelteinflüsse am Fahrzeug erreicht.

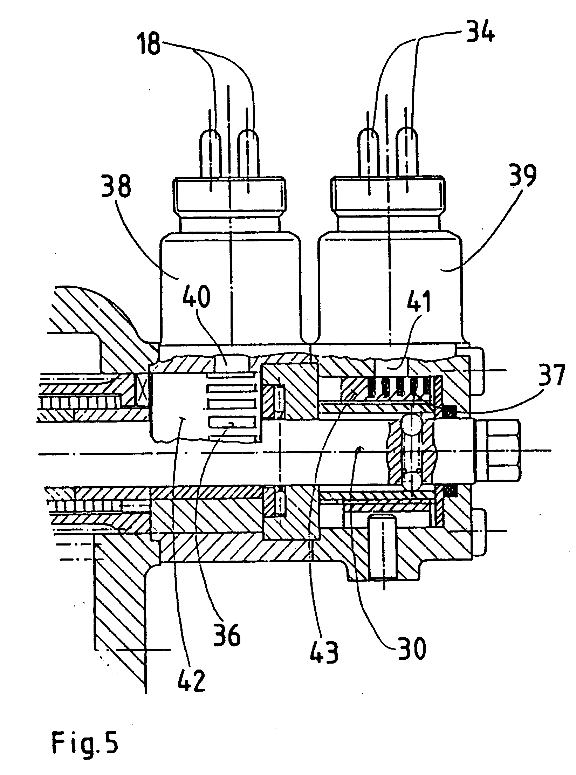

Gemäß Fig.5 sind die in der Fig.1 gezeigten Steuerkurven (15) und (31) durch magnetfelderzeugende oder magnetfeldverändernde Elemente (36, 37) ersetzt. Hierzu sind Signalgeber (38, 39) mit Magnetfeldsensoren (40, 41), die als Wegsensoren (40, 41) dienen, vorgesehen. Auf einer Hülse (42) dienen die Elemente (36) durch eine Relativbewegung gegenüber dem Wegsensor (40) zur Erzeugung des Meßweges (s) für den Bremshebelausschlag zur Kontrolle des Bremslüftspiels. Auf einem Bauteil (43) dienen die Elemente (37) durch eine Relativbewegung gegenüber dem Wegsensor (41), von der Nachstelleinrichtung (5, 7) betätigt, der Erzeugung des Meßweges (n) zur Kontrolle des Bremsbelagverschleißes.

Die elektrischen Signale an den elektrischen Anschlüssen (18, 34) der Signalgeber (16, 33; 38, 39) können zur Steuerung einer optischen oder akustischen Anzeigeeinrichtung im Fahrerhaus, oder zur Weiterleitung an eine elektrische Auswerteeinrichtung eines stationären Diagnosecenters, z.B. anläßlich einer Fahrzeuginspektion, vorteilhaft genutzt werden.

## Patentansprüche

1. Bremsbetätigungseinrichtung mit einer Einrichtung zum Nachstellen einer Bremse, insbesondere einer Fahrzeugbremse, mit folgenden Merkmalen:
a) es ist ein Bremshebel vorgesehen, der zusammen mit einer Bremswelle um deren Drehachse eine Schwenkbewegung ausführt, die zur Betätigung einer Bremse, im Sinne des Überwindens eines Bremslüftspiels zwecks Annäherung eines Bremsbelages an eine Bremstrommel, dient;
b) zwischen dem Bremshebel und der Bremswelle ist eine Nachstelleinrichtung vorgesehen, mit der die Bremswelle gegenüber dem Bremshebel um die Drehachse der Bremswelle, im Sinne der Aufrechterhaltung des Bremslüftspiels bei Verschleiß des Bremsbelages, verstellbar ist,
c) die Nachstelleinrichtung ist in der Art eines Getriebes, mit einem auf der Bremswelle drehfest angeordneten Schneckenrad und einer mit diesem in Eingriff befindlichen Schnecke, ausgebildet;
gekennzeichnet durch die folgenden Merkmale:
d) es ist ein erster Signalgeber (16, 38) mit einem Wegsensor (17, 40) vorgesehen, der zum Abtasten eines dem Überwinden des Bremslüftspiels entsprechenden ersten Meßweges (s) dient und in Abhängigkeit von dem abgetasteten ersten Meßweg (s) ein Signal erzeugt;
e) es ist ein zweiter Signalgeber (33, 39) mit einem Wegsensor (32, 41) vorgesehen, der zum Abtasten eines mit der Nachstelleinrichtung (5, 7) erzeugbaren zweiten Meßweges (n) dient und in Abhängigkeit von dem abgetasteten zweiten Meßweg (n) ein Signal erzeugt.

2. Einrichtung nach Anspruch 1, mit folgenden Merkmalen:
a) es ist eine selbsttätige Nachstelleinrichtung (5, 7) vorgesehen, mit einem Antrieb (8, 9, 10), der zur Betätigung der Nachstelleinrichtung (5, 7) dient;
b) der Antrieb (8, 9, 10) führt in Abhängigkeit von der Schwenkbewegung des Bremshebels zu diesem eine Relativbewegung aus,
gekennzeichnet durch folgendes Merkmal:
c) der Antrieb (8, 9, 10) weist ein mit der Schwenkbewegung des Bremshebels (1) drehbares Ritzel (10) auf, das der Erzeugung des ersten Meßweges (s) dient.

3. Einrichtung nach Anspruch 2, gekennzeichnet durch folgende Merkmale:
a) das Ritzel (10) ist in dem Bremshebel (1) angeordnet und weist einen einstückig bzw. drehfest mit dem Ritzel (10) verbundenen Fortsatz (13) auf, der sich außerhalb des Bremshebels (1) erstreckt;
b) der Fortsatz (13) weist eine an seinem Umfang sich erstreckende Vertiefung (15) in der Art einer Steuerkurve (15) auf, die der Erzeugung des Meßweges (s) dient. (Fig.2)

4. Einrichtung nach Anspruch 3, dadurch gekennzeichnet, daß der Fortsatz (13) ein an seinem Umfang sich erstreckende Erhöhung in der Art einer Steuerkurve (15) aufweist, die der Erzeugung des ersten Meßweges (s) dient.

5. Einrichtung nach den Ansprüchen 3 und 4, dadurch gekennzeichnet, daß der Wegsensor (17) in der Art eines Taststiftes (17) ausgebildet ist, der sich mit der am Umfang des Fortsatzes (13) in Form einer Vertiefung oder Erhöhung erstreckenden Steuerkurve (15) im Eingriff befindet.

6. Einrichtung nach Anspruch 1, dadurch gekennzeichnet, daß ein der Erzeugung des zweiten Meßweges (n) dienendes Bauteil (26, 43), vorgesehen ist, das mit der der Nachstelleinrichtung (5, 7) zugeordneten Schnecke (7) verstellbar ist.

7. Einrichtung nach Anspruch 6, dadurch gekennzeichnet, daß das Bauteil (26, 43) längsverschieblich bezüglich der Schnecke (7) angeordnet ist und der zweite Meßweg (n) in Abhängigkeit von der Verstellbewegung der Schnecke (7) erzeugbar ist.

8. Einrichtung nach wenigstens einem der vorhergehenden Ansprüche 1, 6 und 7,
gekennzeichnet durch die folgenden Merkmale:
a) die Schnecke (7) ist in dem Bremshebel (1) angeordnet und weist einen einstückig oder drehfest mit der Schnecke (7) verbundenen Fortsatz (6) auf, der sich außerhalb des Bremshebels (1) erstreckt;
b) zwischen dem Fortsatz (6) und dem Bauteil (26, 43) ist ein Übertragungsmechanismus (24, 25) zur Umwandlung der Verstellbewegung der Schnecke (7) in eine Bewegung des Bauteils (26, 43) längs zu dessen Verschiebeachse (30) vorgesehen.

9. Einrichtung nach den Ansprüchen 1 und 8, dadurch gekennzeichnet, daß der Wegsensor (32) des Signalgebers (33) als Taststift (32) ausgebildet ist, der sich mit einer zur Verschiebeachse (30) des Bauteils (26) geneigten Steuerkurve (31) im Eingriff befindet.

10. Einrichtung nach Anspruch 8, dadurch gekennzeichnet, daß der Übertragungsmechanismus (24, 25) aus einem Innengewinde (25) des Bauteils (26, 43) gebildet ist, das mit einem mit dem Fortsatz (6) drehfest verbundenen Außengewinde (24) im Eingriff befindlich ist.

11. Einrichtung nach Anspruch 10, dadurch gekennzeichnet, daß das dem Fortsatz (6) zugeordnete Außengewinde (24) auf einer dem Fortsatz (6) umgreifenden und mit diesem drehfest verbundenen Buchse (19) angeordnet ist.

12. Einrichtung nach Anspruch 11, dadurch gekennzeichnet, daß ein zwischen der Buchse (19) und dem Fortsatz (6) wirksames Rastgesperre (24) vorgesehen ist, mit dem die Buchse (19) und der Fortsatz (6) in beliebige Raststellungen zueinander bringbar sind.

13. Einrichtung nach Anspruch 1, dadurch gekennzeichnet, daß der Nachstelleinrichtung (5, 7) magnetfelderzeugende oder magnetfeldverändernde Elemente (37) zugeordnet sind, deren Bewegung relativ zu einem Signalgeber (39) mit einem als Magnetfeldsensor (41) ausgebildeten Wegsensor (41) als zweiter Meßweg (n) registrierbar ist.

14. Einrichtung nach Anspruch 13, dadurch gekennzeichnet, daß die magnetfelderzeugenden oder magnetfeldverändernden Elemente (37) an einam mit der Nachstelleinrichtung (5, 7) antreibbaren Bauteil (43) angeordnet sind.

15. Einrichtung nach Anspruch 3, dadurch gekennzeichnet, daß ein mit dem Ritzel (10) einstückig oder drehfest verbundener Fortsatz (42) mit magnetfelderzeugenden oder magnetfeldverändernden Elementen (36) versehen ist, deren Bewegung relativ zu einem Signalgeber (38) mit einem als Magnetfeldsensor (40) ausgebildeten Wegsensor (40) als erster Meßweg (s) registrierbar ist.

## Claims

1. A brake operating arrangement having a device for adjusting a brake, in particular a vehicle brake, having the following features:
a) a brake lever is provided, which together with a brake shaft executes a pivoting movement about the axis of rotation of the brake shaft, which pivoting movement serves to actuate a brake in order to take up a brake release clearance for the purpose of bringing a brake lining nearer to a brake drum;
b) between the brake lever and the brake shaft there is provided an adjusting device with which the brake shaft is displaceable relative to the brake lever about the axis of rotation of the brake shaft, in order to maintain the brake release clearance as the brake lining wears,
c) the adjusting device is in the form of a gear comprising a worm gear arranged on the brake shaft so that they rotate together and an endless screw located in engagement with the worm gear;
characterized by the following feature:
d) a first signal generator (16, 38) with a displacement sensor (17, 40) is provided, which serves for sensing a first measurement displacement (s) corresponding to the taking up of the brake release clearance and generates a signal in dependence on the sensed first measurement displacement (s);
e) a second signal generator (33, 39) with a displacement sensor (32, 41) is provided, which serves for sensing a second measurement displacement (n) which is arranged to be produced by the adjusting device (5, 7), and generates a signal in dependence on the sensed second measurement displacement (n).

2. An arrangement according to claim 1, having the following features:
a) an automatic adjusting device (5, 7) is provided, having a drive means (8, 9, 10) serving for actuating the adjusting device (5, 7);
b) in dependence on the pivoting movement of the brake lever (1) the drive means (8, 9, 10) performs a movement relative thereto,
characterized by the following feature:
c) the drive means (8, 9, 10) has a pinion (10) rotatable with the pivoting movement of the brake lever (1), which serves for generating the first measurement displacement (s).

3. An arrangement according to claim 2, characterized by the following features:
a) the pinion (10) is arranged in the brake lever (1) and has an extension (13) joined in one piece with or to rotate with the pinion (10), which extension extends beyond the brake lever (1);
b) the extension (13) has a depression (15) running on its circumference as a control cam (15), which serves to produce the measurement displacement (s). (Fig. 2).

4. An arrangement according to claim 3, characterized in that the extension (13) has running on its circumference an enlargement as a control cam (15), which serves to produce the first measurement displacement (s).

5. An arrangement according to claims 3 and 4, characterized in that the displacement sensor (17) is in the form of a follower pin (17) which engages with the control cam (15) running on the circumference of the extension (15) in the form of a depression or enlargement.

6. An arrangement according to claim 1, characterized in that a component (26, 43) serving to produce the second measurement displacement (n) is provided, which is adjustable with the endless screw (7) associated with the adjusting device (5, 7).

7. An arrangement according to claim 6, characterized in that the component (26, 43) is arranged to be longitudinally displaceable with respect to the endless screw (7) and the second measurement displacement (n) is arranged to be produced in dependence on the displacement movement of the endless screw (7).

8. An arrangement according to at least one of the preceding claims 1, 6 and 7, characterized by the following features:
a) the endless screw (7) is arranged in the brake lever (1) and has an extension (6) joined in one piece with or to rotate with the endless screw (7), which extension extends beyond the brake lever (1);
b) between the extension (6) and the component (26, 43) there is provided a transfer mechanism (24, 25) which serves to convert the displacement movement of the endless screw (7) into a movement of the component (26, 43) longitudinally with respect to the displacement axis (30) thereof.

9. An arrangement according to claims 1 and 8, characterized in that the displacement sensor (32) of the signal generator (33) is in the form of a follower pin (32) which engages with a control cam (31) inclined to the displacement axis (30) of the component (26).

10. An arrangement according to claim 8, characterized in that the transfer mechanism (24, 25) is constituted by an internal thread (25) of the component (26, 43), which engages with an external thread (24) joined to the extension (6) so that they rotate together.

11. An arrangement according to claim 10, characterized in that the external thread (24) associated with the extension (6) is arranged on a bush (19) surrounding the extension (6) and connected to this so that they rotate together.

12. An arrangement according to claim 11, characterized in that a locking mechanism (24) effective between the bush (19) and the extension (6) is provided, with which the bush (19) and the extension (6) are arranged to be brought into arbitrary locked positions relative to one another.

13. An arrangement according to claim 1, characterized in that the adjusting device (5, 7) has associated with it elements (37) for generating a magnetic field or changing a magnetic field, the movement of which elements relative to a signal generator (39) having a displacement sensor (41) in the form of a magnetic field sensor (41) is arranged to be detected as the second measured path (n).

14. An arrangement according to claim 13, characterized in that the elements (37) for generating a magnetic field or changing a magnetic field are arranged on a component (43) driveable with the adjusting device (5, 7).

15. An arrangement according to claim 3, characterized in that an extension (42) connected in one piece with or so as to rotate with the pinion (10) and having elements (36) for generating a magnetic field or changing a magnetic field is provided, the movement of which elements relative to a signal generator (38) are arranged to be detected by means of a displacement sensor (40) in the form of a magnetic field sensor (40) as a first measurement displacement (s).

## Revendications

1. Dispositif d'actionnement de frein comportant un dispositif de rattrapage de frein, en particulier d'un frein de véhicule, présentant les caractéristiques suivantes:
a) il est prévu un levier de frein qui, conjointement à un arbre de frein, exécute autour de l'axe de rotation de ce dernier un mouvement de pivotement qui sert à actionner un frein pour surmonter un jeu entre les garnitures de frein, dans le but de rapprocher une garniture de frein contre un tambour de frein;
b) entre le levier de frein et l'arbre de frein est prévu un dispositif de rattrapage qui permet de régler l'arbre de frein par rapport au levier de hein autour de l'axe de rotation de l'arbre de hein, dans le but de maintenir le jeu entre les garnitures lorsque les garnitures de frein s'usent;
c) le dispositif de rattrapage est réalisé à la manière d'un système à engrenage constitué par une roue tangente agencée solidairement en rotation sur l'arbre de frein et par une vis tangente se trouvant en engagement avec ladite roue tangente;
caractérisé par les caractéristiques suivantes:
d) il est prévu un premier émetteur (16, 38) avec un détecteur de course (17, 40), qui sert à balayer une première course de mesure (s) correspondant au dépassement du jeu des garnitures et qui engendre un signal en fonction de la première course de mesure (s) balayée;
e) il est prévu un second émetteur (33, 39) avec un détecteur de course (32, 41), qui sert à balayer une seconde course de mesure (n) qui peut être engendrée avec le dispositif de rattrapage (5, 7) et qui engendre un signal en fonction de la seconde course de mesure (n) balayée.

2. Dispositif selon la revendication 1, comportant les caractéristiques suivantes:
a) il est prévu un dispositif de rattrapage 5, 7 automatique comportant un entraînement (8, 9, 10) qui sert à actionner le dispositif de rattrapage (5, 7);
b) l'entraînement (8, 9, 10) exécute un mouvement relatif en fonction du mouvement de pivotement du levier de hein par rapport à celui-ci,
caractérisé par la caractéristique suivante :
c) l'entraînement (8, 9, 10) comprend un pignon (10) capable de pivoter avec le mouvement de pivotement du levier de frein (1), ledit pignon servant à engendrer la première course de mesure (s).

3. Dispositif selon la revendication 2, caractérisé par les caractéristiques suivantes :
a) le pignon (10) est agencé dans le levier de frein (1) et présente un prolongement (13) relié d'une seule pièce ou solidaire en rotation avec le pignon (10), ledit prolongement s'étendant en dehors du levier de frein (1) ;
b) le prolongement (13) présente une dépression (15) s'étendant sur sa périphérie sous la forme d'une came de commande (15), qui sert à engendrer la course de mesure (s). (Figure 2)

4. Dispositif selon la revendication 3, caractérisé en ce que le prolongement (13) présente un relief s'étendant sur sa périphérie sous la forme d'une came de commande (15), qui sert à engendrer la première course de mesure (s).

5. Dispositif selon les revendications 3 et 4, caractérisé en ce que le détecteur de course (17) est réalisé sous la forme d'un palpeur (17) qui se trouve en engagement avec la came de commande (15) s'étendant sur la périphérie du prolongement (13) sous la forme d'une dépression ou d'un relief.

6. Dispositif selon la revendication 1, caractérisé en ce qu'il est prévu un élément (26, 43) qui sert à engendrer la seconde course de mesure (n), ledit élément pouvant être réglé avec la vis tangente (7) associée au dispositif de rattrapage (5, 7).

7. Dispositif selon la revendication 6, caractérisé en ce que l'élément (26, 43) est agencé en déplacement longitudinal par rapport à la vis tangente (7) et en ce que la seconde course de mesure (n) peut être engendrée en fonction du mouvement de réglage de la vis tangente (7).

8. Dispositif selon l'une au moins des revendications précédentes 1, 6 et 7, caractérisé par les caractéristiques suivantes :
a) la vis tangente (7) est agencée dans le levier de frein (1) et présente un prolongement (6) réalisé d'une seule pièce ou relié solidairement en rotation avec la vis tangente (7), qui s'étend à l'extérieur du levier de frein (1);
b) entre le prolongement (6) et l'élément (26, 43) est prévu un mécanisme de transmission (24, 25) qui sert à transformer le mouvement de réglage de la vis tangente (7) en un mouvement de l'élément (26, 43) le long de son axe de déplacement (30).

9. Dispositif selon les revendications 1 et 8, caractérisé en ce que le détecteur de course (32) de l'émetteur (33) est réalisé sous la forme d'un palpeur (32) qui se trouve en engagement avec une came de commande (31) inclinée vers l'axe de déplacement (30) de l'élément (26).

10. Dispositif selon la revendication 8, caractérisé en ce que le mécanisme de transmission (24, 25) est formé par un taraudage (25) de l'élément (26, 43), qui se trouve en engagement avec un filetage (24) solidaire en rotation du prolongement (6).

11. Dispositif selon la revendication 10, caractérisé en ce que le filetage (24) associé au prolongement (6) est agencé sur une douille (19) entourant le prolongement (6) et reliée solidairement en rotation avec celui-ci.

12. Dispositif selon la revendication 11, caractérisé en ce qu'il est prévu un encliquetage (24) à crans agissant entre la douille (19) et le prolongement (6), par lequel la douille (19) et le prolongement (6) peuvent être amenés dans des positions d'encliquetage quelconques l'une par rapport à l'autre.

13. Dispositif selon la revendication 1, caractérisé en ce que le dispositif de rattrapage (5, 7) est pourvu d'éléments (37) engendrant ou modifiant un champ magnétique, dont le mouvement par rapport à un émetteur (39) peut être enregistré sous la forme d'une seconde course de mesure (n), au moyen d'un détecteur de course (41) réalisé sous la forme d'un détecteur de champ magnétique (41).

14. Dispositif selon la revendication 13, caractérisé en ce que les éléments (37) engendrant ou modifiant un champ magnétique sont agencés sur un élément (43) qui peut être entraîné par le dispositif de rattrapage (5, 7).

15. Dispositif selon la revendication 3, caractérisé en ce qu'un prolongement (42) relié d'une seule pièce ou solidairement en rotation avec le pignon (12) est pourvu d'éléments (36) engendrant ou modifiant un champ magnétique, dont le mouvement par rapport à un émetteur (38) peut être enregistré à titre de première course de mesure (s) au moyen d'un détecteur de course (40) réalisé sous la forme d'un détecteur de champ magnétique (40).
